# EUROPEAN PATENT SPECIFICATION

(11) **EP 4 001 079 B1**
(45) Date of publication and mention of the grant of the patent: **09.08.2023**
(21) Application number: 21209478.3
(22) Date of filing: 22.11.2021
(51) Int. Cl.: B62K 3/00, B62K 15/00, B62K 21/00, B62K 23/02

(54) **TWO WHEELED ELECTRIC VEHICLE**
ZWEIRÄDRIGES ELEKTROFAHRZEUG
VÉHICULE ÉLECTRIQUE À DEUX ROUES

(30) Priority: 24.11.2020 IT 202000028175
(43) Date of publication of application: 25.05.2022
(73) Proprietor: de Lucia, Maurizio, 59100 Prato (IT); Vangi, Dario, 50134 Firenze (IT)
(72) Inventor: de Lucia, Maurizio, 59100 Prato (IT); Vangi, Dario, 50134 Firenze (IT)
(74) Representative: Mannucci, Michele

(56) References cited:
- EP-A1- 2 425 989
- EP-A1- 3 183 165
- DE-A1- 10 045 821

## Description

### TECHNICAL FIELD

The present invention relates to the field of electric vehicles. More in particular, the invention concerns an electric vehicle with two wheels aligned in longitudinal direction, i.e., in the direction of forward movement of the vehicle.

### BACKGROUND ART

The growing awareness of environmental damage deriving from the emission of exhaust gases from internal combustion engines into the environment and the ever-increasing density of traffic in urban areas have motivated the research and development of alternative solutions for mobility, in particular in urban environments. Recently there has been an increase in the demand for electric motors to replace internal combustion engines in vehicles with small dimensions, intended in particular for mobility in urban areas.

Vehicles that are increasingly widely used are electric bicycles, or pedal assisted bicycles, in which a battery powered electric motor supplies power generally to the rear drive wheel, which is added to the muscle power applied by the user, or replaces it fully.

Electric bicycles are costly and bulky. Moreover, when the on-board battery is exhausted, pedalling the bicycle with muscle power alone is much more tiring, due to the torque applied by the motor.

Recently, electric scooters are becoming increasingly widely used as an alternative to pedal assisted bicycles. These vehicles comprise a front steered wheel and a rear wheel, connected to each other by a footboard. The front steered wheel is provided with a rotation movement about an axis lying on a vertical plane, i.e., orthogonal to the footboard, and oriented in the longitudinal direction of the vehicle controlled through a handlebar. Frequently, the drive wheel is the rear wheel and the power batteries of the electric motor are usually located under the footboard. However, in some embodiments the drive wheel is the front wheel.

An electric scooter of the current art is disclosed, for example, in EP2425989. Electric scooters are a direct evolution of manual scooters with no motor, an example of which is disclosed in WO2016/027018 (EP3183165). Document EP2425989A1 shows the preamble of claim 1.

With respect to pedal assisted bicycles, scooters have the advantage of a lower weight and lower cost. However, they are difficult and uncomfortable to ride, especially on rough ground. The small dimension of the wheels tends to make the vehicle unstable, dangerous and not comfortable to ride and limits braking capacities, which increases the dangerousness of the electric scooter, for example with respect to the pedal assisted bicycle.

Alternative electric vehicles are monowheels, i.e., vehicles consisting of a single wheel, into which an electric motor is incorporated, having a stator integral with the hub of the wheel and a rotor integral with the rim of the wheel. Two lateral footboards integral with the hub allow the rider to ride the vehicle remaining in an erect position. These vehicles are very compact and can be easily transported, but riding them requires a certain amount of skill and balance and consequently they can be very dangerous for inexperienced riders, who are not sufficiently familiar with the riding technique.

Recently, electric vehicles with two coaxial wheels, joined by a central footboard on which the rider stands, have been developed. Vehicles of this kind with a control handlebar have the trade name Segway^{®} (registered trademark owned by Segway Inc, Delaware, USA), while vehicles without a handlebar are known as hoverboards. Both these vehicles are difficult to handle and not easy for daily travel use. The vehicles provided with a handlebar are bulky, heavy and very costly. The vehicles without a handlebar require particular balancing skills and are difficult to ride.

Therefore, there is still a need to develop electric vehicles that entirely or partly overcome one or more of the drawbacks and limits of the vehicles according to the current state of the art.

### SUMMARY

To overcome or partially alleviate the drawbacks of prior art vehicles, there is proposed herein a two wheeled electric vehicle, comprising a front steered wheel and a rear wheel aligned in the direction of forward movement of the vehicle and connected to each other by a connecting footboard, on which a rider, who rides the vehicle in an erect position, can stand. The vehicle further comprises an electric traction motor; a power supply battery and a handlebar constrained to the front steered wheel, configured to impart steered movements to the front wheel. The motor is incorporated in the front wheel. This configuration improves riding of the vehicle.

The front wheel comprises: an annular hub, with which a stator of the electric motor is integral; and a rim, supported rotating about the hub and with which a rotor of the electric motor is integral.

The windings of the electric motor are distributed on the annular hub, leaving a large empty central space. In this way, in the empty central space it is possible, for example, to connect the footboard to the hub of the front wheel through a double hinge. The double hinge allows a folding movement of the footboard about a first hinge axis so as to position the footboard approximately parallel to the handlebar reducing the footprint of the vehicle. The double hinge comprises a second hinge axis, orthogonal to the first hinge axis, which defines the steering axis of the front wheel. In practice, the first hinge axis is horizontal, while the second hinge axis lies on a vertical or inclined plane, but orthogonal to the first hinge axis. In practical embodiments, the double hinge is placed under the rotation axis of the front wheel.

In the present description and in the appended claims, unless otherwise specified, the terms relating to orientations ("horizontal", "vertical") and to the relative positions ("above", "upper", "under", "lower") of single members or components of the vehicle refer to a condition in which the vehicle is in an erect position, with the steering not turned and with a zero roll angle, i.e., in the position taken in conditions of forward movement in a straight line.

To control accelerations and decelerations of the vehicle, the handlebar can be adapted to impart acceleration and deceleration commands to the electric motor through forward and backward movement of the handlebar in the direction of forward movement of the vehicle, by means of an electronic control, preferably using a gyroscope. In substance, acceleration and deceleration can thus be controlled by the rider intuitively simply by moving the body forward and backward while riding. The electronic control system can be made in the same way as those in coaxial two-wheeled vehicles, for example of the type disclosed in US 6,302,230 and US 8,830,048 and in monowheels.

To improve riding comfort and safety, and in order to house the electric traction motor more conveniently, the front wheel has a larger dimension than the rear wheel. For example, the radius of the front wheel can preferably be between around 1.5 and around 2 times the radius of the rear wheel. With respect to a conventional scooter, in which the front and rear wheels have substantially the same diameter, by providing the front wheel with a larger diameter and the rear wheel with a smaller diameter it is possible to have a front wheel of larger dimensions with respect to conventional scooters. As the front wheel is both steered and drive, its increased diameter provides improved riding comfort and safety and in particular reduces the sensitivity of the vehicle to roughness of the ground.

Advantageously, the handlebar can be rigidly constrained to the hub of the front wheel. In this way, rotation of the handlebar about an axis of the steering column of the handlebar transmits the steering movement to the front steered wheel, while a forward or backward pushing movement, with respect to the direction of forward movement of the vehicle, applied on the handlebar acts on the gyroscopic acceleration and deceleration control system.

In practical embodiments, the handlebar is constrained to the hub of the front wheel in a position above the rotation axis of the front wheel. In practice, the double hinge and the anchor point of the handlebar are constrained to the hub of the front wheel in approximately diametrically opposite positions.

In advantageous embodiments, the handlebar is rigidly connected to the hub of the front wheel through a connection member, preferably a fork member, i.e., an upside down U-shaped member, which partially surrounds the front wheel and has two opposite arms constrained to the hub of the front wheel.

To reduce the wiring and make the vehicle more stable and easier to handle both while riding and while being transported in the folded position, the battery can be rigidly constrained to the handlebar. For example, the battery can be constrained to the two arms of the connection member, which connects the handlebar to the front wheel. The battery can be partially housed inside the hub of the front wheel, i.e., it extends from one arm to the other of the connection member through the hub of the front wheel.

In practical embodiments, the footboard is hinged to the annular hub of the front wheel about an axis orthogonal to the steering axis, to allow folding of the footboard (and of the rear wheel) toward the handlebar, which remains rigidly connected to the annular hub of the front wheel, forming therewith a single rigid assembly. This configuration allows the elimination of any configuration of "headset" type typical of bicycles and scooters.

### BRIEF DESCRIPTION OF THE DRAWINGS

The invention will now be better understood by following the description and the accompanying drawings, which illustrate a non-limiting exemplary of embodiment of the invention. More in particular, in the drawing:
Fig.1 shows an axonometric view of a vehicle in a first embodiment, in conditions of use;
Fig.2 shows an axonometric view of the vehicle in folded condition;
Fig.3 shows a plan view of the vehicle in a position with the steering not turned;
Fig.4 shows a view analogous to Fig.3, with the front wheel turned to the left;
Fig.5 shows an axonometric view of the front part of the vehicle with the handlebar detached from the front wheel;
Fig.6 shows a section according to a vertical plane of the double hinge that connects the front wheel to the footboard;
Fig.7 shows a lateral view with parts removed of the front portion of the vehicle;
Fig.8 shows a lateral view of the front wheel of the vehicle without the tyre;
Fig.9 shows a section according to IX-IX of Fig.8;
Fig.10 shows an axonometric view of a vehicle in a second embodiment;
Fig.11 shows a plan view of the vehicle of Fig. 10; and
Figs. 12 and 13 show an enlarged axonometric view of the constraint between front wheel and footboard of the vehicle of Figs. 10 and 11.

### DETAILED DESCRIPTION

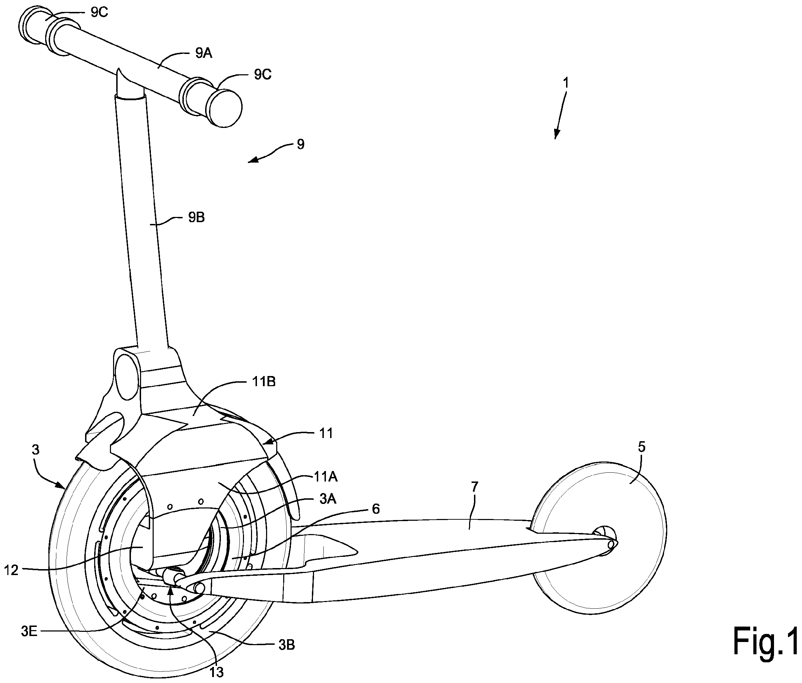

An embodiment of the vehicle disclosed herein is shown in Figs. 1 to 9.

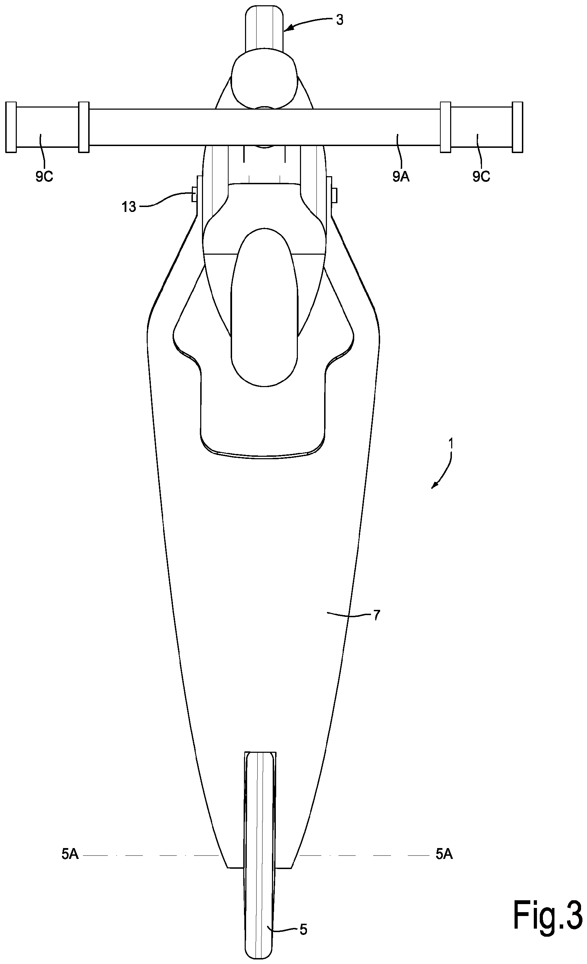

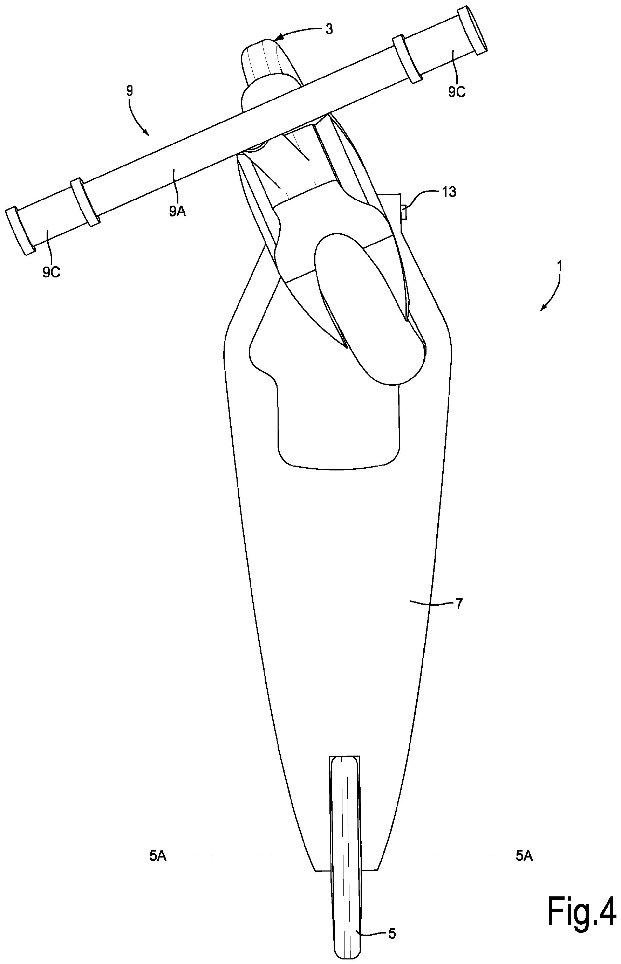

The vehicle 1 comprises a front steered wheel 3 and a rear wheel 5. The front steered wheel 3 is connected to the rear wheel 5 through a footboard 7. The rear wheel 5 is connected to the footboard 7 so as to rotate with respect thereto about the axis 5A (Figs.3, 4) of the rear wheel 5.

A handlebar 9, with a horizontal bar 9A and an upright 9B, is rigidly connected to the front steered wheel 3, in the manner described in greater detail below. The horizontal bar 9A forms handles or handgrips 9C that are gripped firmly by the rider to control the vehicle and in particular to steer the vehicle and to control the acceleration, deceleration and braking thereof.

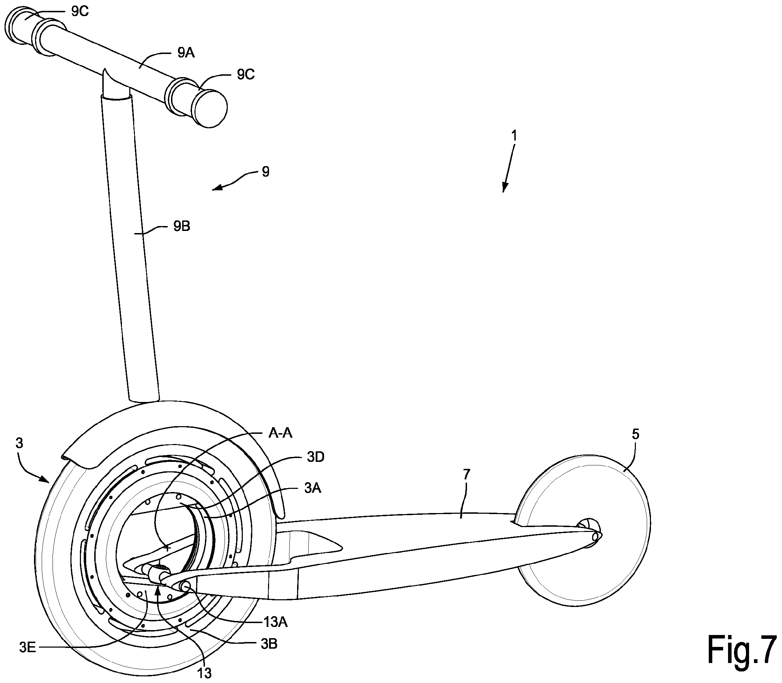

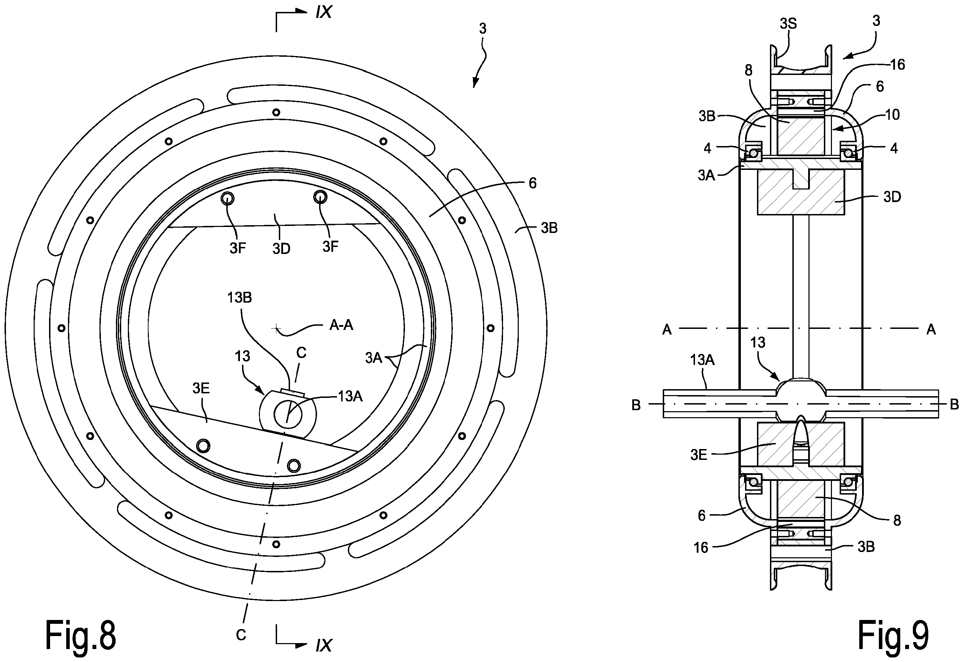

In the embodiment illustrated, as better shown in Fig.7, the front steered wheel 3 comprises an inner annular hub 3A and an outer rim 3B. The annular hub 3A and the rim 3B are concentric and the rim 3B is rotatingly supported about the annular hub 3A by means of a bearing system 4 (see Figs. 8 and 9). Annular protective covers 6 can be associated with the rim 3B to protect the bearings 4.

According to some embodiments, as shown in particular in Figs. 8 and 9, which show the front wheel 3 with the tyre removed and with the groove for housing the tyre indicated with 3S, the windings 8 of an electric motor 10 are integral with the annular hub 3A and coact with permanent magnets 16 integral with the rim 3B. In substance, the electric windings 8 integral with the annular hub 3A form the stator of the electric motor 10 and the permanent magnets 16 integral with the rim 3B form the rotor of the electric motor 10.

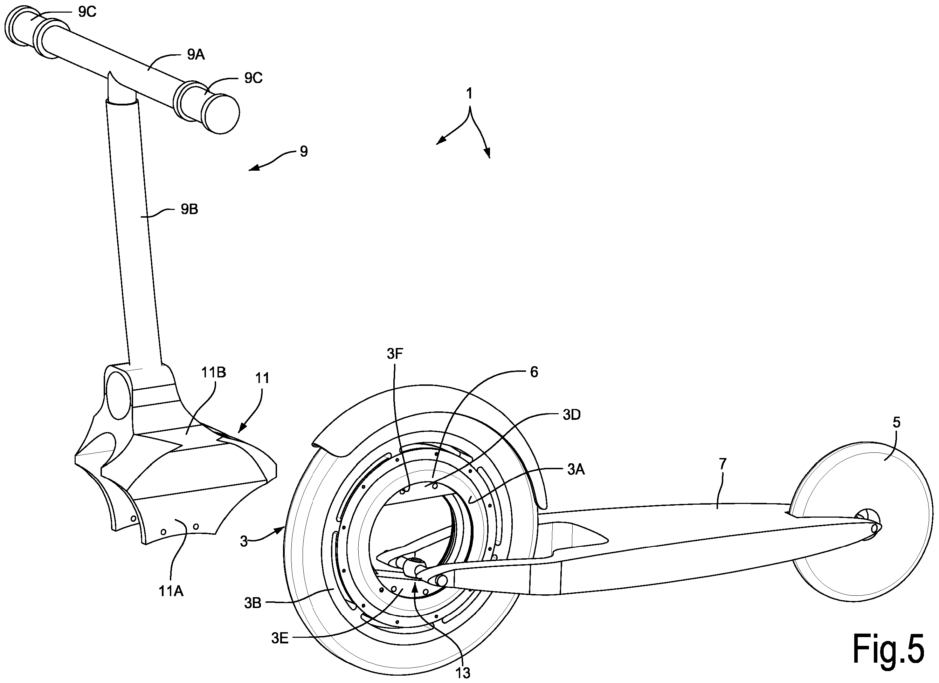

The annular hub 3 is configured so that the handlebar 9 and the footboard 7 are constrained thereto. More in particular, the handlebar 9 is rigidly constrained to the annular hub 3A through a connection member 11. In the illustrated embodiment, the connection member 11 is fork-shaped and has a pair of arms 11A connected to a cross member 11B, with which the lower end of the upright 9B of the handlebar 9 is integral. The shape of the connection member 11 is shown in particular in Fig.5. The connection member 11 is fixed to the annular hub 3A along the upper part thereof, i.e., in a position above the rotation axis A-A of the front steered wheel 3. The rigid connection between the connection member 11 and the annular hub 3A can be (see Fig.5) through pins that are inserted into holes 11F of the connection member 11 and into corresponding holes 3F provided in a crescent-shaped plate 3D of the annular hub 3A, which extends into the empty central space of the annular hub 3A, or to the annular hub 3 directly.

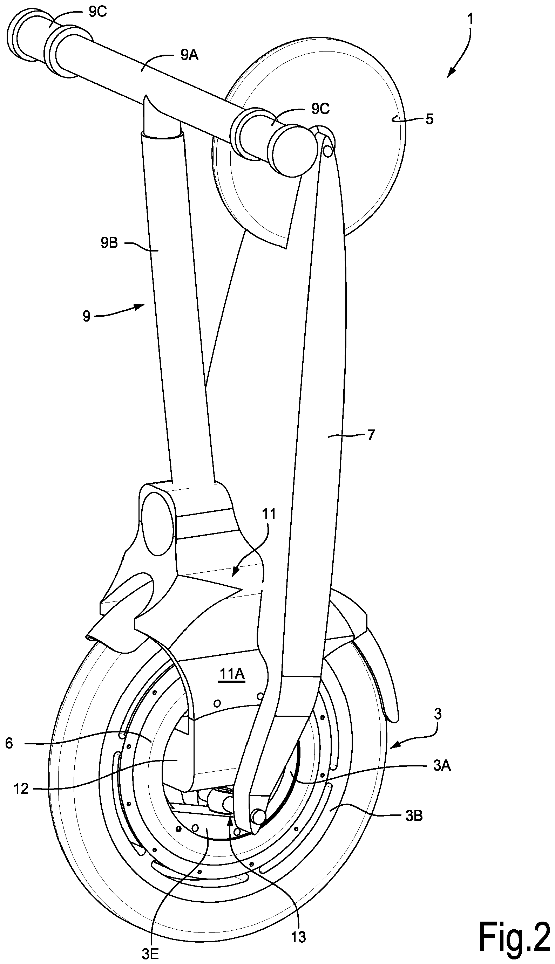

A battery 12, suitably protected in a housing, can be fixed to the lower ends of the arms 11A of the connection member 11. The battery 12 extends from one to the other of the arms 11A, so as to occupy part of the empty volume inside the annular hub 3A of the front steered wheel 3. Contrary to conventional electric scooters, in the vehicle according to the present invention the battery, which is a relatively heavy component of the vehicle, does not add weight to the footboard, but its weight is substantially supported by the front steered wheel 3, thus contributing to make riding of the vehicle easier and above all to make the vehicle easier and less cumbersome to transport when folded (Fig.2). In fact, in this condition the weight of the battery, together with the weight of the other components (handlebar 9, footboard 7, rear wheel 5) is transferred to the ground through the front steered wheel 3 and the user can easily push the vehicle 1 by hand, steering it with the handlebar 9. If the motor is switched on, the electronic acceleration and deceleration controls managed by the handlebar 9 allow the vehicle 1 to be moved forward, even when it is folded, by means of the handlebar 9.

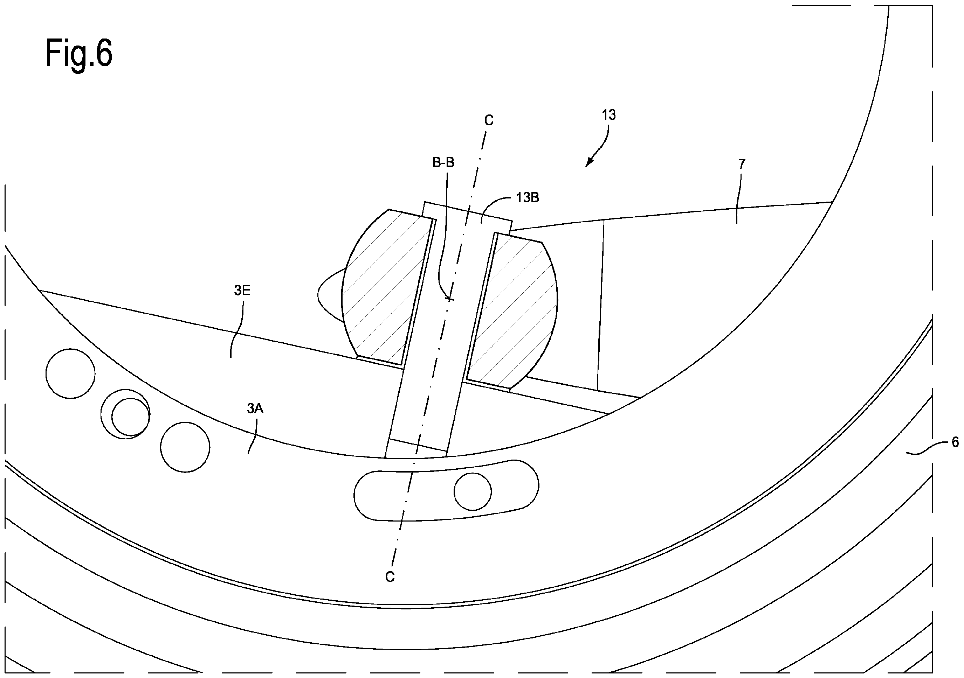

To connect the footboard 7 to the front steered wheel 3 a double hinge 13, shown in particular in Figs. 5 and 6, is provided. The double hinge 13 defines a first substantially horizontal axis B-B (when the vehicle is moving forward in a straight line, see Fig.3). The axis B-B is the axis about which the footboard 7 rotates to take the vehicle from the riding condition (Fig.1) to the folded position (Fig.2). The axis B-B can be defined by a pair of pins 13A. The hinge 13 further defines a second rotation axis C-C orthogonal to the first rotation axis B-B and lying on a vertical plane (when the vehicle is in the position for forward movement in a straight line, not inclined laterally, see Fig.3) oriented according to the front-rear direction of the vehicle 1, i.e., according to the direction of forward movement. As can be seen in Fig.6, the axis C-C is preferably inclined with respect to the vertical to obtain a non-zero front wheel trail angle. The rotation axis C-C is defined by a pin 13B of the hinge 13 and forms the steering axis of the front steered wheel 3. The pin 13B is hinged in a crescent-shaped plate 3E of the annular hub 3A. The two plates 3D and 3E are approximately opposite each other, so that while the plate 3D is above the rotation axis A-A of the front steered wheel 3, the plate 3E is under the rotation axis A-A.

With the described arrangement, the front steered wheel 3, which is also the drive wheel of the vehicle 1, can rotate freely about the steering axis C-C under the control of the handlebar 9, while the rider is on the vehicle, standing on the footboard 7. When the vehicle requires to be folded, the footboard 7 is lifted and positioned approximately parallel to the handlebar 9 by means of a rotation about the horizontal axis B-B, without the need to release members.

The electronic control of the vehicle, which can be made similarly to those used in monowheel vehicles or in "Segway"^{®} vehicles, can be housed in the connection member 11. This electronic control, derived from solutions available on the market, controls the power supply of the electric motor, and in particular acceleration and deceleration, and other operations such as battery charging.

The described vehicle allows to obtained a plurality of advantages over individual electric vehicles of the current art, briefly referred to in the introduction. The dimension of the front wheel and its use as steered and drive wheel makes riding simpler and more comfortable, as well as safer, even on rough ground. The acceleration and braking torques generated by the motor are high and provide greater safety while riding.

In the embodiment described above, the double hinge 13, with which the footboard 7 is constrained to the front wheel 3 to allow rotation of the wheel about the steering axis C-C and rotation of the footboard 7 about the axis B-B, is embodied by two pins 13A and 13B orthogonal to each other. This embodiment is particularly advantageous as the two rotation movements about the axes B-B and C-C are obtained with revolute pairs.

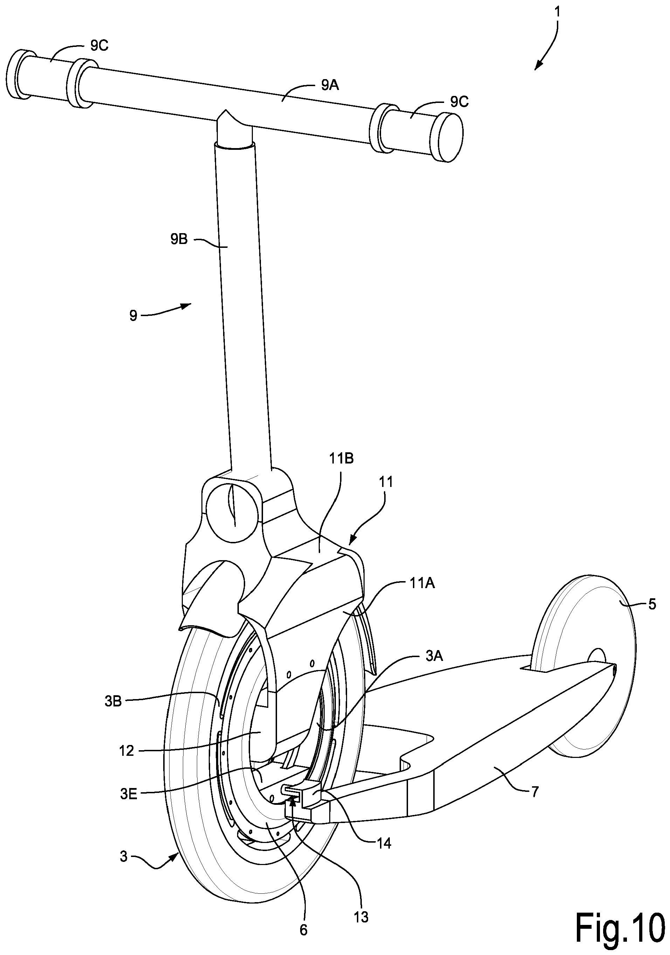

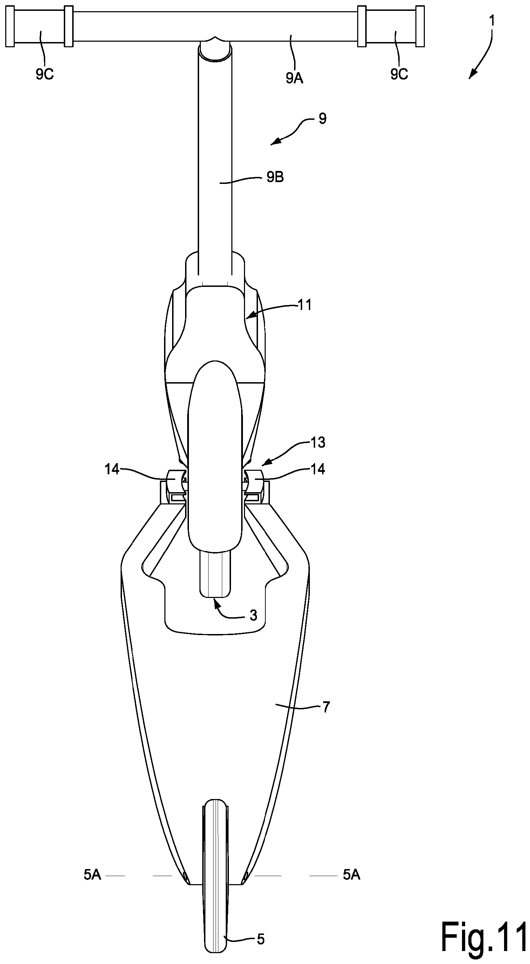

Figs. 10 to 13 show a second embodiment of the vehicle 1, which differs from the vehicle of Figs. 1 to 9 mainly due to the different structure of the double hinge connection between the footboard 7 and the front wheel 3. In Figs. 10 to 13 the same numbers indicate identical or equivalent parts to those of Figs. 1 to 9, which will not be described again.

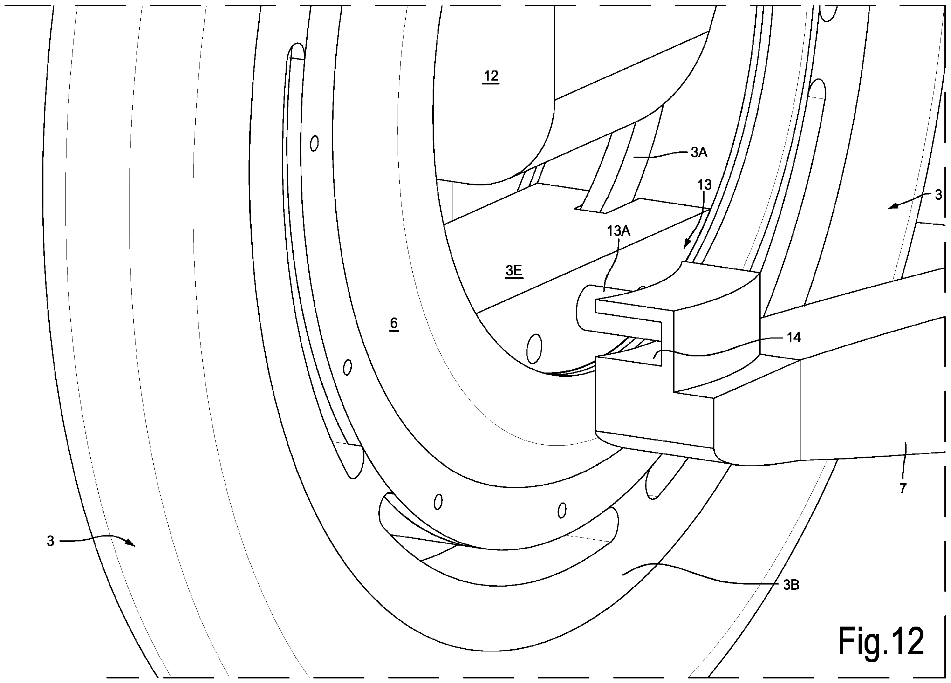

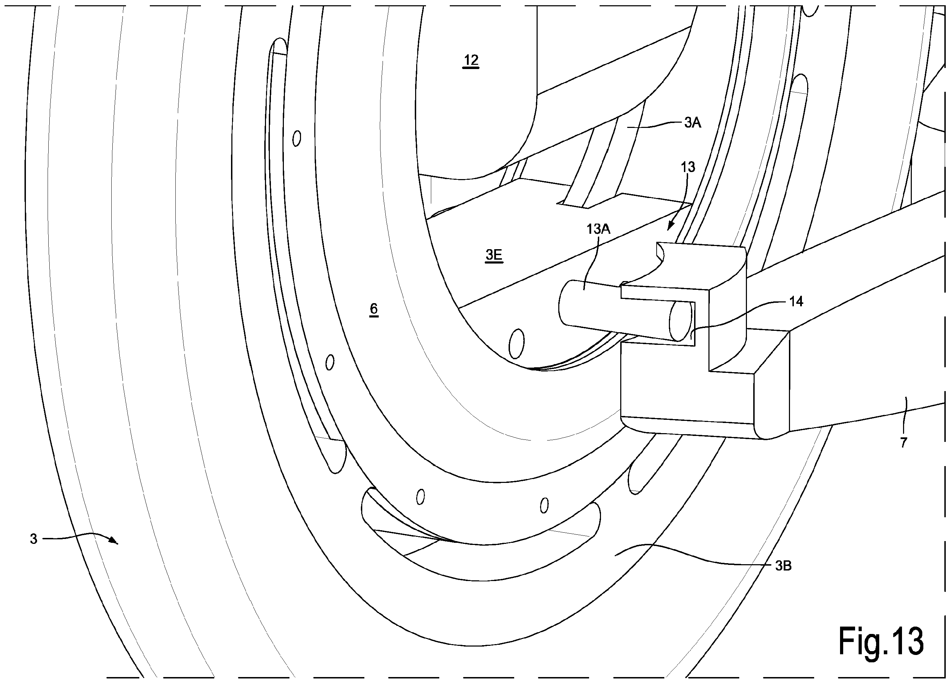

The different structure of the double hinge connection between the footboard 7 and the front wheel 3 is shown in particular in the enlarged details of Figs. 12 and 13. In Fig. 12 the front wheel 3 is in a straight position, i.e., the front wheel 3 lies in the vertical plane oriented in a front-rear direction of the vehicle, i.e., oriented in the direction of movement of the vehicle. In Fig. 13 the front wheel 3 is turned to the right.

In this embodiment, the pin 13A that defines the rotation axis B-B is rigidly connected to the plate 3D, integral with the annular hub 3A. The footboard 7 is integral with two opposite guides 14, into which the two opposite ends of the pin 13A are inserted. The guides can advantageously be in the shape of arcs of a circle sufficiently large to allow the pin 13A to be guided for the whole of the arc of rotation of the front wheel 3 about the steering axis C-C. This axis is defined by the guides 14, which impart a rotation movement to the pin 13A about the axis C-C when the rider imparts a steered movement to the front wheel 3 by means of the handlebar 9. The tipping movement of the footboard 7 toward the handlebar 9 when the vehicle 1 is folded is obtained by rotation of the guides 14 (integral with the footboard 7) about the axis B-B of the pin 13A. As can be understood from Figs. 12 and 13, the double hinge 13 is in this case defined by two prismatic pairs, formed by the guides 14 in which the pin 13 runs.

The small dimension of the rear wheel does not affect riding safety, as the stability of the vehicle is given by the front wheel 3. This allows the use of a rear wheel 5 of small diameter without loss of safety and riding comfort, reducing the weight and footprint of the vehicle. The possibility of folding the footboard 7 and the rear wheel 5 toward the handlebar 9 allows the dimensions of the vehicle to be reduced thus making it easier to transport, for example on public transport (trains, buses). The possibility of handling the vehicle 1 in the folded arrangement (Fig.2) using the handlebar 9 maintaining the drive motor of the vehicle 1 running reduces the effort required to push the vehicle by hand.

The vehicle described herein is ridden in substance like an electric monowheel, but with much greater ease, as it does not require balance skills due to the presence of a handlebar, which also acts as member for controlling accelerations and decelerations of the vehicle, and as support for the rider. The footboard provides a convenient footrest and the rear wheel, in combination with the front wheel and the footboard, allow the rider to maintain balance easily and intuitively.

## Claims

1. An electric vehicle (1) comprising:
- a front steered wheel (3);
- a rear wheel (5);
- a footboard (7) connecting the front steered wheel (3) and the rear wheel (5);
- an electric traction motor (10) incorporated in the front wheel (3);
- a power supply battery (12); and
- a handlebar (9) constrained to the front wheel (3), configured to impart steered movements to the front wheel;
wherein:
- the front wheel (3) comprises: an annular hub (3A), with which a stator of the electric motor is integral, and a rim (3B), supported rotating about the annular hub (3A) and with which a rotor of the electric motor is integral;
- the footboard is hinged by means of a double hinge (13) to the annular hub (3A) of the front wheel (3); the double hinge (13) allowing a folding movement of the footboard (7) about a first hinge axis (B-B) toward the handlebar (9), and a steered movement of the front wheel (3) about a second hinge axis (C-C), orthogonal to the first hinge axis (B-B); **characterized in that**
- the handlebar (9) is adapted to impart acceleration and deceleration commands to the electric motor (10) through forward and backward movements of the handlebar (9) in the direction of forward movement of the vehicle, by means of an electronic control.

2. The vehicle (1) of claim 1, wherein the handlebar (9) is rigidly constrained to the annular hub (3A) of the front wheel (3).

3. The vehicle (1) of claim 1 or 2, wherein the handlebar (9) is constrained to the annular hub (3A) of the front wheel (3) in a position above the rotation axis of the front wheel.

4. The vehicle (1) of claim 1, 2 or 3, wherein the double hinge (13) is positioned under the rotation axis of the front wheel (3).

5. The vehicle (1) of one or more of the preceding claims, wherein the electronic control uses a gyroscope.

6. The vehicle (1) of one or more of the preceding claims, wherein the front wheel (3) has a larger dimension than the rear wheel (5), with a radius preferably between around 1.5 and around 2 times the radius of the rear wheel (5).

7. The vehicle (1) of one or more of the preceding claims, wherein the handlebar (9) is connected to the front wheel (3) through a connection member (11), rigidly connected to the handlebar (9) and to the annular hub (3A) of the front wheel (3); and wherein the double hinge (13) is configured to allow folding of the footboard (7) about a first hinge axis (B-B) toward the handlebar (9), which remains rigidly connected, through the connection member (11) to the annular hub (3A) of the front wheel (3).

8. The vehicle (1) of claim 7, wherein the connection member (11) is a fork member which partially surrounds the front wheel (3) and has two opposite arms (11A) rigidly constrained to the annular hub (3A) of the front wheel (3).

9. The vehicle (1) of one or more of the preceding claims, wherein the battery (12) is rigidly constrained to the handlebar (9).

10. The vehicle (1) of claim 8, wherein the battery (12) is rigidly constrained to the two arms (11A) of the fork connection member (11), which connects the handlebar (9) to the front wheel (3), and extends through the annular hub (3A) of the front wheel (3).

11. The vehicle (1) of one or more of the preceding claims, wherein the double hinge (13) comprises a first pin (13A) defining the rotation axis (B-B) of the footboard (7) about the annular hub (3A) of the front wheel (3), and a second pin (13B) defining a steering axis (C-C), the second pin (13B) preferably being integral with the annular hub (3A) and the first pin (13A) being hinged to the second pin (13B) to rotate about the steering axis (C-C).

## Patentansprüche

1. Ein elektrisches Fahrzeug (1) umfassend:
- ein gelenktes Vorderrad (3);
- ein Hinterrad (5);
- ein Trittbrett (7), das das gelenkte Vorderrad (3) und das Hinterrad (5) verbindet;
- einen elektrischen Fahrmotor (10), der in das Vorderrad (3) eingebaut ist;
- eine Stromversorgungsbatterie (12); und
- eine Lenkstange (9), die am Vorderrad (3) befestigt ist und zur Vermittlung von Lenkbewegungen an das Vorderrad ausgebildet ist;
wobei:
- das Vorderrad (3) umfasst: eine ringförmige Nabe (3A), die einstückig mit einem Stator des Elektromotors ausgeführt ist, und eine Felge (3B), die um die ringförmige Nabe (3A) drehbar gelagert ist und die einstückig mit einem Rotor des Elektromotors ausgeführt ist;
- das Trittbrett mittels eines Doppelscharniers (13) an der ringförmigen Nabe (3A) des Vorderrads (3) schwenkbar angebracht ist; wobei das Doppelscharnier (13) eine Klappbewegung des Trittbretts (7) um eine erste Scharnierachse (B-B) in Richtung der Lenkstange (9) und eine Lenkbewegung des Vorderrads (3) um eine zweite Scharnierachse (C-C), die orthogonal zur ersten Scharnierachse (B-B) verläuft, ermöglicht; **dadurch gekennzeichnet, dass**
- die Lenkstange (9) ausgebildet ist, dem Elektromotor (10) durch Vorwärts- und Rückwärtsbewegungen der Lenkstange (9) in Richtung der Vorwärtsbewegung des Vehikels mittels einer elektronischen Steuerung Beschleunigungs- und Verzögerungsbefehle zu erteilen.

2. Fahrzeug (1) gemäß Anspruch 1, wobei der Lenker (9) starr mit der ringförmigen Nabe (3A) des Vorderrads (3) verbunden ist.

3. Fahrzeug (1) nach Anspruch 1 oder 2, wobei der Lenker (9) an der ringförmigen Nabe (3A) des Vorderrads (3) in einer Position oberhalb der Drehachse des Vorderrads befestigt ist.

4. Fahrzeug (1) nach Anspruch 1, 2 oder 3, wobei das Doppelscharnier (13) unterhalb der Drehachse des Vorderrads (3) angeordnet ist.

5. Fahrzeug (1) nach einem oder mehreren der vorangegangenen Ansprüche, wobei die elektronische Steuerung ein Gyroskop verwendet.

6. Fahrzeug (1) gemäß einem oder mehreren der vorangegangenen Ansprüche, wobei das Vorderrad (3) eine größere Abmessung als das Hinterrad (5) aufweist, mit einem Radius, vorzugsweise zwischen etwa dem 1,5- und etwa dem 2-fachen des Radius des Hinterrads (5).

7. Fahrzeug (1) gemäß einem oder mehreren der vorangegangenen Ansprüche, wobei der Lenker (9) mit dem Vorderrad (3) über ein Verbindungselement (11) verbunden ist, das starr mit dem Lenker (9) und mit der ringförmigen Nabe (3A) des Vorderrads (3) verbunden ist; wobei das Doppelscharnier (13) so ausgebildet ist, dass es ein Umklappen des Trittbretts (7) um eine erste Scharnierachse (B-B) in Richtung der Lenkstange (9) ermöglicht, die über das Verbindungselement (11) mit der ringförmigen Nabe (3A) des Vorderrads (3) starr verbunden bleibt.

8. Fahrzeug (1) nach Anspruch 7, wobei das Verbindungselement (11) ein Gabelelement ist, das das Vorderrad (3) teilweise umgibt und zwei gegenüberliegende Arme (11A) aufweist, die starr mit der ringförmigen Nabe (3A) des Vorderrades (3) verbunden sind.

9. Fahrzeug (1) gemäß einem oder mehreren der vorangegangenen Ansprüche, wobei die Batterie (12) starr an der Lenkstange (9) befestigt ist.

10. Fahrzeug (1) nach Anspruch 8, wobei die Batterie (12) starr an den beiden Armen (11A) des Gabelelements (11) befestigt ist, das die Lenkstange (9) mit dem Vorderrad (3) verbindet, und sich durch die ringförmige Nabe (3A) des Vorderrads (3) erstreckt.

11. Fahrzeug (1) gemäß einem oder mehreren der vorangegangenen Ansprüche, wobei das Doppelscharnier (13) einen ersten Stift (13A), der die Drehachse (B-B) des Trittbretts (7) um die ringförmige Nabe (3A) des Vorderrads (3) definiert, und einen zweiten Stift (13B), der eine Lenkachse (C-C) definiert, umfasst, wobei der zweite Stift (13B) vorzugsweise einstückig mit der ringförmigen Nabe (3A) ist und der erste Stift (13A) an dem zweiten Stift (13B) schwenkbar angebracht ist, um sich um die Lenkachse (C-C) zu drehen.

## Revendications

1. Un véhicule électrique (1) comprenant :
- une roue avant directrice (3) ;
- une roue arrière (5) ;
- un repose-pied (7) connectant la roue avant directrice (3) et la roue arrière (5) ;
- un moteur à traction électrique (10) incorporé dans la roue avant (3) ;
- une batterie d'alimentation (12) ; et
- un guidon (9) solidaire de la roue avant (3), configuré pour donner des mouvements de direction à la roue avant ;
dans lequel :
- la roue avant (3) comprend : un moyeu annulaire (3A), avec lequel un stator du moteur électrique forme une seule pièce, et une jante (3B), supportée en rotation autour du moyeu annulaire (3A) et avec laquelle un rotor du moteur électrique forme une seule pièce ;
- le repose-pied est articulé au moyen d'une double articulation (13) au moyeu annulaire (3A) de la roue avant (3) ; la double articulation (13) permettant un mouvement de pliage du repose-pied (7) autour d'un premier axe d'articulation (B-B) vers le guidon (9), et un mouvement de direction de la roue avant (3) autour d'un deuxième axe d'articulation (C-C), perpendiculaire au premier axe d'articulation (B-B), **caractérisé en ce que**
la guidon (9) est apte à donner des commandes d'accélération et de décélération au moteur électrique (10), par l'intermédiaire de mouvements vers l'avant et vers l'arrière du guidon (9), dans la direction vers l'avant du véhicule, au moyen d'une commande électronique.

2. Le véhicule (1) selon la revendication 1, dans lequel le guidon (9) est fixé rigidement au moyen annulaire (3A) de la roue avant (3).

3. Le véhicule (1) selon la revendication 1 ou 2, dans lequel le guidon (9) est fixé au moyen annulaire (3A) de la roue avant (3) à un endroit situé au-dessus de l'axe de rotation de la roue avant.

4. Le véhicule (1) selon la revendication 1, 2 ou 3, dans lequel la double articulation (13) est située sous l'axe de rotation de la roue avant (3).

5. Le véhicule (1) selon l'une ou plusieurs des revendications précédentes, dans lequel la commande électronique utilise un gyroscope.

6. Le véhicule (1) selon l'une ou plusieurs des revendications précédentes, dans lequel la roue avant (3) a une dimension supérieure à celle de la roue arrière (5), avec un rayon de préférence compris entre 1,5 et 2 fois le rayon de la roue arrière (5).

7. Le véhicule (1) selon l'une ou plusieurs des revendications précédentes, dans lequel le guidon (9) est connecté à la roue avant (3) par l'intermédiaire d'un organe de connexion (11), rigidement connecté au guidon (9) et au moyeu annulaire (3A) de la roue avant (3) ; et dans lequel la double articulation (13) est configurée pour permettre un pliage du repose-pied (7) autour d'un premier axe d'articulation (B-B) vers le guidon (9), lequel reste rigidement connecté, par l'intermédiaire de l'organe de connexion (11), au moyeu annulaire (3A) de la roue avant (3).

8. Le véhicule (1) selon la revendication 7, dans lequel l'organe de connexion (11) est un organe formant fourche qui entoure partiellement la roue avant (3) et comporte deux bras opposés (11A) fixés rigidement au moyen annulaire (3A) de la roue avant (3).

9. Le véhicule (1) selon l'une ou plusieurs des revendications précédentes, dans lequel la batterie (12) est fixée rigidement au guidon (9).

10. Le véhicule (1) selon la revendication 8, dans lequel la batterie (12) est rigidement fixée aux deux bras (11A) de l'organe de connexion formant fourche (11), lequel connecte le guidon (9) à la roue avant (3) et s'étend à travers le moyen annulaire (3A) de la roue avant (3).

11. Le véhicule (1) selon l'une ou plusieurs des revendications précédentes, dans lequel la double articulation (13) comprend une première tige (13A) formant l'axe de rotation (B-B) du repose-pied (7) autour du moyen annulaire (3A) de la roue avant (3), et une deuxième tige (13B) formant un axe de direction (C-C), la deuxième tige (13B) étant de préférence d'un seul tenant avec le moyeu annulaire (3A) et la première tige (13A) étant articulée à la deuxième tige (13B) pour tourner autour de l'axe de direction (C-C).
